# EUROPEAN PATENT APPLICATION

(11) **EP 2 265 030 A2**
(43) Date of publication of application: **22.12.2010**
(21) Application number: 10165602.3
(22) Date of filing: 11.06.2010
(51) Int. Cl.: H04N 9/804, H04N 5/85

(54) **Moving picture reproduction apparatus**

(30) Priority: 15.06.2009 JP 2009142523
(71) Applicant: Funai Electric Co., Ltd., Daito-shi, Osaka 574-0013 (JP)
(72) Inventor: Nakagawa, Kengo, Daito-shi, Osaka 574-0013 (JP)
(74) Representative: Grünecker, Kinkeldey, Stockmair & Schwanhäusser Anwaltssozietät

(57) **Abstract**

In a moving picture reproduction apparatus such as an optical disc player 1, a controller 5 serving as a reproduction judger judges whether reproduction of the video content is stopped or not, the controller 5 serving as a key frame searcher searches a key frame which is a nearest in reproducing direction from a position of a frame at a time when reproduction of the video content was stopped with reference to time codes stored in the memory; and the controller 5 serving as a reproduction controller restarts the reproduction of the video content from the searched key frame.

## Description

The present invention relates to a moving picture reproduction apparatus such as a video player including a DVD (Digital Versatile Disc) player or a hard disc recorder.

Recently, compression and uncompression technologies for compressing data of a video (moving picture) content, recording the compressed data into a recording medium, uncompressing the compressed data and reproducing the video content are widely used. In a moving picture reproduction apparatus which reproduces such a kind of video contents, when reproduction of a video content is stopped due to occurrence of an error during data reading from a recording medium or data processing of the read data, a recovery process is performed for restarting the reproduction of the video content, in general.

Hereupon, JP10-269684A discloses a conventional reproduction apparatus for recording medium. In the conventional reproduction apparatus, when reproduction of video content is stopped due to occurrence of an error as mentioned above, data reading is restarted from a position where the reproduction of the video content is stopped, and if the error cannot be recovered by the data reading, data reading is restarted from a position a predetermined time ahead of the position where the reproduction of the video content is stopped. However, if a frame in data of the video content located at the position where the data reading is restarted is not a key frame, the data readout cannot be decoded, so that it is necessary to search the appearance of a key frame. Consequently, it takes a long time to restart the reproduction of the video content from stopping the reproduction of the video content, or to recover from irreproducible state.

JP2002-140875A discloses another conventional optical disc reproduction apparatus. In the conventional optical disc reproduction apparatus, when data cannot be readout from the optical disc, remaining amount of readout data stored in a buffer memory is detected or scratches on the optical disc is detected, and a number of times of retry to reading out data at a predetermined reproduction position is varied responding to the result of the detection of the remaining amount of the data or the number or size of the scratches. However, it is impossible to solve the above mentioned problem that a time-lag from stopping to restarting of the reproduction of the video content becomes longer in this conventional optical disc reproduction apparatus.

The present invention is conceived to solve the above mentioned problem and purposed to provide a moving picture reproduction apparatus which enables to restart reproduction of a video content quickly when reproduction of the video content is stopped due to occurrence of an error during data reading from a recording medium or processing the readout data.

A moving picture reproduction apparatus in accordance with an aspect of the present invention comprises:
a pickup device which reads out data including video data and audio data from a recording medium into which compressed data of a video content is recorded;
a decoder which decodes the data read by the pickup device and generates video signals and audio signals and outputs the video data and the audio data to an external apparatus;
a memory which stores time codes showing position information of respective frames of the video content among data readout by the optical pickup;
a reproduction judger which judges whether reproduction of the video content is stopped or not;
a key frame searcher which searches a key frame which is a nearest in reproducing direction from a position of a frame at a time when reproduction of the video content was stopped with reference to time codes stored in the memory; and
a reproduction controller which restarts the reproduction of the video content from the searched key frame.

According to such a configuration, when the reproduction judger which judges that the reproduction of the video content is stopped, the key frame searcher searches the key frame which is located at a position nearest in reproducing direction to the position of the frame at the time when the reproduction of the video content was stopped, and the reproduction controller restarts the reproduction of the video content from the searched key frame. Therefore, video signals and audio signals can be generated effectively in a short time from the stop of reproduction of the video content, and thus, the reproduction of the video content can be restarted.

While the novel features of the present invention are set forth in the appended claims, the present invention will be better understood from the following detailed description taken in conjunction with the drawings.

### BRIEF DESCRIPTION OF THE DRAWINGS

The present invention will be described hereinafter with reference to the annexed drawings. It is to be noted that all the drawings are shown for the purpose of illustrating the technical concept of the present invention or embodiments thereof, wherein:

FIG. 1A is a block diagram showing an electrical configuration of an optical disc player which is an embodiment of the moving picture reproduction apparatus in accordance with the present invention;

FIG. 1B is a block diagram showing a configuration of a controller of the optical disc player;

FIG. 2 is a flowchart showing control processes which are performed by the controller of the optical disc player; and

FIG. 3 is a drawing showing a data configuration of a video content.

### DETAILED DESCRIPTION OF THE EMBODIMENT

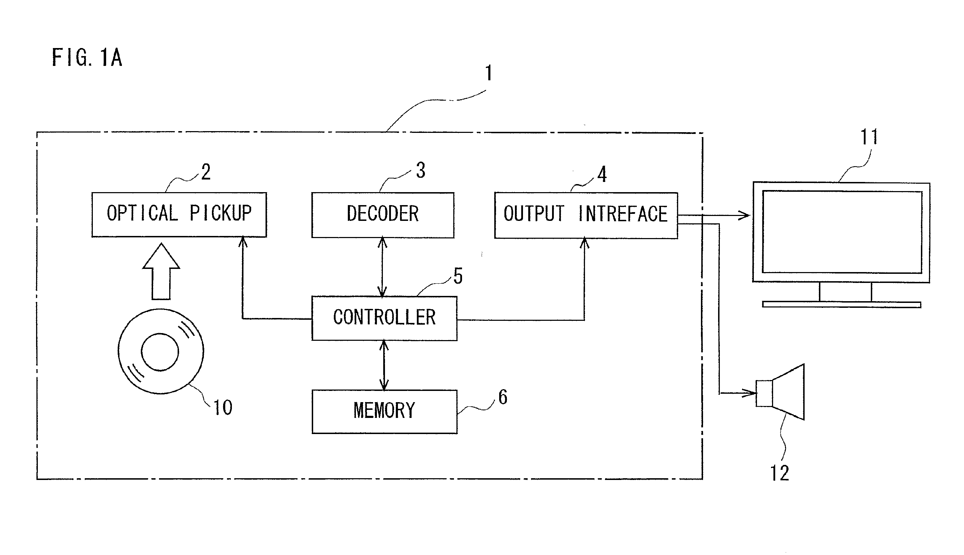

A moving picture reproduction apparatus in accordance with an embodiment of the present invention is described with reference to the figures. FIG. 1A is a block diagram showing an electrical configuration of an optical disc player 1 such as a DVD player or a Blue-Ray Disc player which is an embodiment of the moving picture reproduction apparatus. The optical disc player 1 reproduces a video content which is recorded on an optical disc (recording medium) 10 such as a DVD or a Blue-Ray Disc. The optical disc player 1 comprises an optical pickup 2 which is used to readout video data and audio data from the optical disc 10, and a decoder (signal generator) 3 which decodes readout data readout by the optical pickup 2 and generates video signals and audio signals. The optical disc player 1 further comprises an output interface 4 which outputs video signals from the decoder 3 to a monitor display apparatus 11 and outputs audio signals from the decoder 3 to speakers 12, a controller 5 such as a CPU (Central Processing Unit) which controls each section of the optical disc player 1, and a memory 6 which stores operation programs of the controller 5 and various kinds of data. Hereupon, a video content is recorded in an optical disc as a compressed file which is configured of key frames and difference frames of the key frames. As for a file format, AVI (Audio Video Interleaving) format can be exemplified.

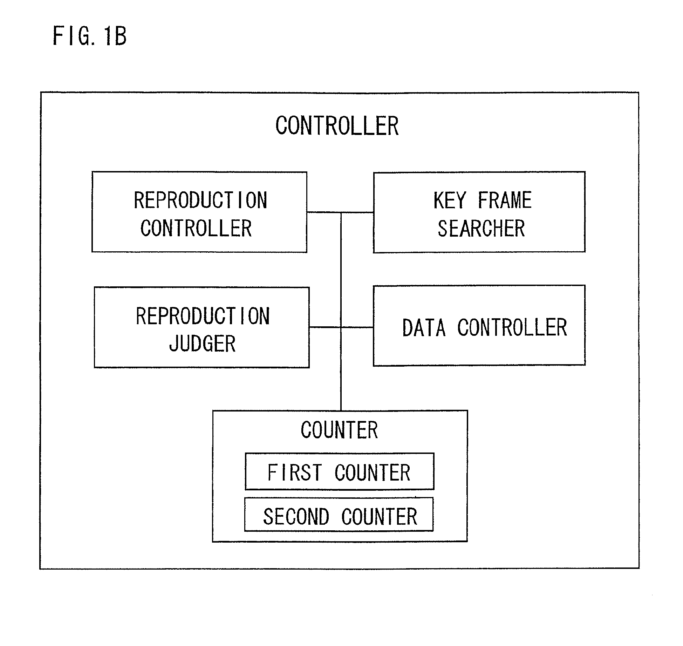

FIG. 1B shows a block diagram of the controller 5. The controller 5 serves as a data controller to store time codes which show position information of respective frames of the video content among data readout by the optical pickup 5 into the memory 6. The controller 5 further serves as a reproduction judger which judges whether reproduction of the video content is stopped or not due to occurrence of an error during reading out of the data by the optical pickup 2 or signal generation by the decoder 3. Hereupon, the controller 5 serving as the reproduction judger obtains time information corresponding to video signals and judges that the video content has been reproduced when the time information is renewed corresponding to time passing, and judges that reproduction of the video content is stopped when the time information is not renewed. As for the cause of the occurrence of the error, data destruction in the optical disc 10 or scratches on the optical disc 10 is exemplified. When the controller 5 serving as the reproduction judger detects the stop of reproduction of the video content, the controller 5 specifies a position of a frame which was just readout when the reproduction of the video content was stopped with reference to time codes stored in the memory 6. Subsequently, the controller 5 serving as a key frame searcher searches a key frame which is the nearest in the reproducing direction from the specified position of the frame, and the controller 5 serving as a reproduction controller restarts the reproduction of the video content from the searched key frame.

When the reproduction of the video content is restarted from the key frame, the controller 5 serving as the reproduction judger judges whether the reproduction of the video content is recovered from stopped state due to occurrence of an error during reading out of the data by the optical pickup 2 or signal generation by the decoder 3 or not. Hereupon, when a reproduction continuation time period after restarting of reproduction of the video content from the key frame is longer than a predetermined time period, the controller 5 serving as the reproduction judger judges that the reproduction of the video content is recovered from the stopped state. When the reproduction of the video content is not recovered, that is, the reproduction of the video content is re-stopped in the predetermined time period after restarting the reproduction of the video content from the key frame, the controller 5 serving as the key frame searcher searches another key frame which is the nearest to the position of the key frame which was previously searched with reference to the time codes stored in the memory 6, and the controller 5 serving as the reproduction controller repeats the processes to reproduce the video content from the newly searched key frame. In addition, the controller 5 serving as a counter counts a retrial times to retry the processes to reproduce the video content from the newly searched key frame. When the retrial times go over a predetermined limitation number "L", the controller 5 serving as the reproduction controller performs a process to stop the reproduction of the video content.

Hereupon, when the controller 5 retries the reproduction of the video content a predetermined number of times, it is supposed that an area on a recording face of the optical disc 10 near to the position where the reproduction of the video content is stopped is entirely damaged to be irreproducible. Therefore, it is effective to recover from irreproducible state in a short time period by shipping a predetermined number of key frames. In this embodiment, the number of key frames to be skipped is decided corresponding to the retrial times. In addition, if the optical disc (recording medium) 10 is entirely damaged and the limitation number "L" is not set, the recovery process is repeated endlessly, and thus, a user may think the optical disc player 1 be frozen. Thus, when the retrial process is repeated by the limitation number "L", it is judged that the optical disc 10 is irreproducible, and the retrial process is completed.

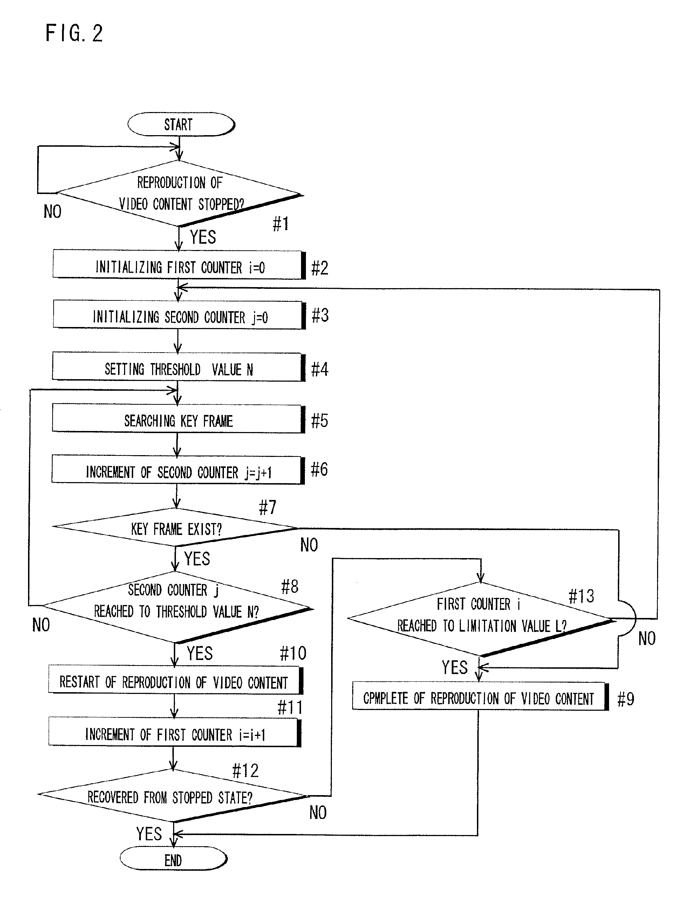

Subsequently, control processes of the controller 5 in the optical disc player 1 are described. FIG. 2 is a flowchart showing the processes in the controller 5. Hereupon, it is assumed that the controller 5 serving as the reproduction controller has already started the reproduction process of the video content. The controller 5 serving as the reproduction judger judges whether reproduction of the video content is stopped or not due to occurrence of an error during reading out of the data by the optical pickup 2 or signal generation by the decoder 3 (#1). When the controller 5 serving as the reproduction judger judges the stopping of the reproduction of the video content (YES in the step #1), the controller 5 serving as the counter initializes a value of a first counter (retrial counter) "i" for counting the retrial times to "0" (#2). Alternatively, when the controller 5 serving as the reproduction judger judges the reproduction of the video content is not stopped (NO in the step #1), the controller 5 serving as the reproduction judger repeats the judging process in the step #1. After initializing the value of the first counter "i" (process in the step #2), the controller 5 serving as the counter initializes a value of a second counter (skip counter) "j" for counting the researching times of the key frames to "0" (#3), and the controller 5 serving as the key frame searcher sets a threshold value "N" used to search the key frames (#4). The threshold value "N" is selected corresponding to the value of the first counter "i", that is a number of retrial times. Hereupon, (N-1) numbers of key frames are skipped.

After setting the threshold value "N" (process in the step #4), the controller 5 serving as the key frame searcher searches a key frame which is the nearest in the reproducing direction from a position of a frame at a time when the reproduction of the video content was stopped with reference to time codes stored in the memory 6 (#5), and the controller 5 serving as the counter increments the value of the second counter "j" (#6). Hereupon, the position of the searched key frame is stored in the memory 6 as a position to start the search which will be used when search of another key frame is restarted until these control processes are completed. Subsequently, the controller 5 serving as the key frame searcher judges whether any key frame is included among the data of the video content remained without being reproduced or not (#7). When any key frame is included in the remained video content (YES in the step #7), the controller 5 serving as the counter judges whether the value of the second counter "j" reaches to the threshold value "N" or not (#8). Alternatively, when no key frame is included in the remained data of the video content, the controller 5 serving as the reproduction controller completes the reproduction process of the video content (#9).

When the value of the second counter "j" reaches to the threshold value "N" (YES in the step #8), the controller 5 serving as the reproduction controller restarts the reproduction of the video content from the searched key frame (#10). The controller 5 serving as the counter increments the value of the first counter "i" (#11). Alternatively, when the value of the second counter "j" does not reach to the threshold value "N" (NO in the step #8), the controller 5 serving as the key frame searcher searches another key frame again (#5). In other words, the controller 5 serving as the reproduction controller does not restart to reproduce the video content from a key frame searched newest until a value of the second counter "j" reaches to the predetermined threshold value "N". After incrementing the value of the first counter "i" (#11), the controller 5 serving as the reproduction judger judges whether the reproduction of the video content is recovered from stopped state due to occurrence of an error during reading out of the data by the optical pickup 2 or signal generation by the decoder 3 or not (#12). When the reproduction of the video content is recovered (YES in the step #12), the controller 5 serving as the reproduction judger completes these processes. Alternatively, when the reproduction of the video content is not recovered (NO in the step #12), the controller 5 serving as the counter judges whether the value of the second counter "j" reaches to the limitation value "L" previously set or not (#13). When the value of the first counter "i" reaches to the limitation value "L" (YES in the step #13), the controller 5 serving as the reproduction controller completes the reproduction process of the video content (#9). Alternatively, when the value of the first counter "i" does not reach to the limitation value "L" (NO in the step #13), the controller 5 serving as the counter initializes the value of a second counter "j" (#3), and the controller 5 serving as the key frame searcher renews the threshold value "N" (#4).

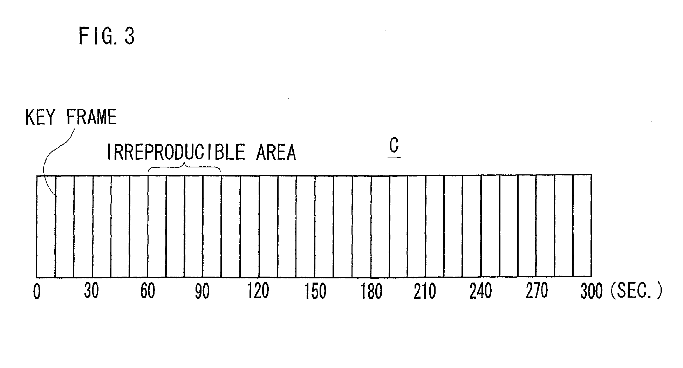

Subsequently, the above mentioned control processes for the video content is concretely described with reference to FIG. 3 and above FIG. 2. FIG. 3 shows a data configuration of a video content C which is used as an example in this description. A total reproduction time of the video content C is 300 sec. and key frames are arranged at an interval of 10 sec., for example. A data area from 60 to 100 sec. of the video content C is assumed as an irreproducible area. The processes for reproducing the video content C from the head of the data is described below. When the value of the second counter "j" is "0" or "1", the threshold value "N" is set to "1". When the value of the second counter "j" is "2", the threshold value "N" is set to "2". In addition, the limitation value "L" is set to "10".

When 60 sec. has passed from the start of reproduction of the video content C, the reproduction of the video content C is stopped, and the values of the first counter "i" and the second counter "j" are respectively set to "0" and the threshold value "N" is set to "1". Since the reproduction of the video content C was stopped at a time passing 60 sec. from the start of reproduction, a key frame which exists after the position of the data at the time passing 60 sec. from the start of reproduction will be searched, and the value of the second counter "j" will be set to "1". In this example, a key frame exists at a position corresponding to 70 sec. from the start of reproduction and the value of the second counter "j" reaches to the threshold value "N", so that reproduction of the video content C is restarted from the position corresponding to 70 sec. and the value of the first counter "i" is set to "1".

The data at the position corresponding to 70 sec., however, is included in the irreproducible area, the reproduction of the video content C is not recovered from irreproducible state. The value of the first counter "i" does not reach to the limitation value "L" at that time, so that the value of the second counter "j" will be set to "0" and the threshold value "N" will be set to "1 ". A key frame exists at a position corresponding to 80 sec. and the value of the second counter "j" reaches to the threshold value "N", so that reproduction of the video content C is restarted from the position corresponding to 80 sec. and the value of the first counter "i" is set to "2".

The data at the position corresponding to 80 sec. is included in the irreproducible area, the reproduction of the video content C is not recovered from irreproducible state. The value of the first counter "i" does not reach to the limitation value "L" at that time, so that the value of the second counter "j" will be set to "0" and the threshold value will be set to "2". At this time, the search of key frame is started from a position corresponding to 80 sec., a key frame which exists after the position corresponding to 80 sec. will be searched, and the value of the second counter "j" will be set to "1". Although a key frame exists at a position corresponding to 90 sec., the value of the second counter "j" does not reach to the threshold value "N", the key frame at the position corresponding to 90 sec. is skipped, another key frame will be searched from the position corresponding to 90 sec. and the value of the second counter "j" will be set to "2". Since a key frame exists at a position corresponding to 100 sec. and it is not included in the irreproducible area and the value of the second counter "j" reaches to the threshold value "N", reproduction of the video content C is restarted from the position corresponding to 100 sec. and the value of the first counter "i" will be set to "3". Consequently, the reproduction of the video content C is recovered from the stopped state.

As mentioned above, according to the optical disc player 1, when it is judged that the reproduction of the video content is stopped, a key frame which is located at a position nearest in reproducing direction to the position of the frame at the time when the reproduction of the video content was stopped, and the reproduction of the video content is restarted from the searched key frame. Therefore, video signals and audio signals can be generated effectively in a short time from the stop of reproduction of the video content, and thus, the reproduction of the video content can be restarted.

In addition, when it is not recovered from the error state, another key frame which is located at a position nearest to the key frame searched just before is newly searched, and restart of the reproduction of the video content is repeated from the key frame newly searched, so that the reproduction of the video content can be recovered from the stopped state soon. Furthermore, since the retrial times goes over a predetermined limitation value, the reproduction of the video content is completed. Thus, unnecessary recovery process can be prevented for the irreproducible recording medium.

## Claims

1. A moving picture reproduction apparatus (1) comprising:
a pickup device (2) which reads out data including video data and audio data from a recording medium (10) into which compressed data of a video content is recorded;
a decoder (3) which decodes the data read by the pickup device (2) and generates video signals and audio signals and outputs the video data and the audio data to an external apparatus (11, 12);
a memory (6) which stores time codes showing position information of respective frames of the video content among data readout by the optical pickup (2), **characterized by** that
the moving picture reproduction apparatus (1) further comprises:
a reproduction judger (5) which judges whether reproduction of the video content is stopped or not;
a key frame searcher (5) which searches a key frame which is a nearest in reproducing direction from a position of a frame at a time when reproduction of the video content was stopped with reference to time codes stored in the memory (6); and
a reproduction controller (5) which restarts the reproduction of the video content from the searched key frame.

2. The moving picture reproduction apparatus in accordance with claim 1, wherein
the reproduction judger (5) further judges whether the reproduction of the video content is recovered from stopped state or not, after restarting the reproduction of the video content by the reproduction controller;
the key frame searcher (5) searches another key frame which is a nearest to the position of the key frame which was previously searched with reference to the time codes stored in the memory, when it is judged that the reproduction of the video content is not recovered from stopped state by the reproduction judger; and
the reproduction controller (5) repeats processes to reproduce the video content from the newly searched key frame.

3. The moving picture reproduction apparatus in accordance with claims 1 or 2, further comprising:
a retrial counter (5) for counting retrial times when the reproduction of the video content is not recovered from stopped state, and wherein
the reproduction controller (5) performs a process to stop the reproduction of the video content, when the retrial times go over a predetermined limitation number.

4. The moving picture reproduction apparatus in accordance with at least one of the preceding claims 1 to 3 , further comprising:
a skip counter (5) for counting for counting researching times of key frames when the reproduction controller repeats processes to reproduce the video content from the newly searched key frame, and wherein
the reproduction controller (5) does not restart to reproduce the video content from a key frame searched newest until a value of the skip counter reaches to a predetermined threshold value.

5. The moving picture reproduction apparatus in accordance with claim 4, wherein
the threshold value is set corresponding to the retrial times.

6. The moving picture reproduction apparatus in accordance with at least one of the preceding claims 1 to 5, further comprising:
a retrial counter (5) for counting retrial times when the reproduction of the video content is not recovered from stopped state;
a skip counter (5) for counting for counting researching times of key frames when the reproduction controller repeats processes to reproduce the video content from the newly searched key frame, and wherein
the reproduction controller (5) does not restart to reproduce the video content from a key frame searched newest until a value of the skip counter reaches to a predetermined threshold value.

7. The moving picture reproduction apparatus in accordance with claim 6, wherein
the threshold value is set corresponding to the retrial times.

8. The moving picture reproduction apparatus in accordance with at least one of the preceding claims 1 to 7, wherein
the reproduction judger (5) obtains time information corresponding to video signals and judges that the video content has been reproduced when the time information is renewed corresponding to time passing, and judges that reproduction of the video content is stopped when the time information is not renewed.
